Europäisches Patentamt

European Patent Office

Office européen des brevets

(19)

(11) **EP 0 704 738 A1**

(12) **EUROPEAN PATENT APPLICATION**

(43) Date of publication:
03.04.1996 Bulletin 1996/14

(51) Int Cl.⁶: **G02B 27/00**

(21) Application number: 95306716.2

(22) Date of filing: 22.09.1995

(84) Designated Contracting States:
**DE FR GB NL**

(30) Priority: 28.09.1994 IL 11107494

(71) Applicant: **SCITEX CORPORATION LTD.**
**Herzliya 46103 (IL)**

(72) Inventors:
• **Lichtenstein, Yoav**
**Ra'anana (IL)**
• **Vronsky, Eliyahu**
**Ramat Hasharon (IL)**

(74) Representative: **Hillier, Peter et al**
**Reginald W. Barker & Co.,**
**Chancery House,**
**53-64, Chancery Lane**
**London, WC2A 1QU (GB)**

(54) **A facet inaccuracy compensation unit**

(57) A method for compensating for inaccuracies in the planes of the facets (64) is provided which is operative in conjunction with a spinner (58) having a plurality of facets, the current one of which scans a light beam along a scan line (54). The compensation unit includes first and second light spot misalignment detectors (67), a beam location corrector (70) and a beam shifter (72). The first and second light spot misalignment detectors are respectively located close to a beginning and an end of the scan line, and respectively measure initial and final misalignments of a light spot scanned in a cross-scanning direction. The beam location corrector determines first and second corrections for the initial and final misalignments and determines a curve through previous values of the first and second corrections for the current facet. The beam shifter receives the curve and, in response thereto, shifts the location of the light beam thereby to correct for inaccuracies of the current facet.

FIG. 3A

EP 0 704 738 A1

# Description

## FIELD OF THE INVENTION

The present invention relates to scanning devices having a spinner generally and to apparatus for compensating for inaccuracies in the planes of the spinner in particular.

## BACKGROUND OF THE INVENTION

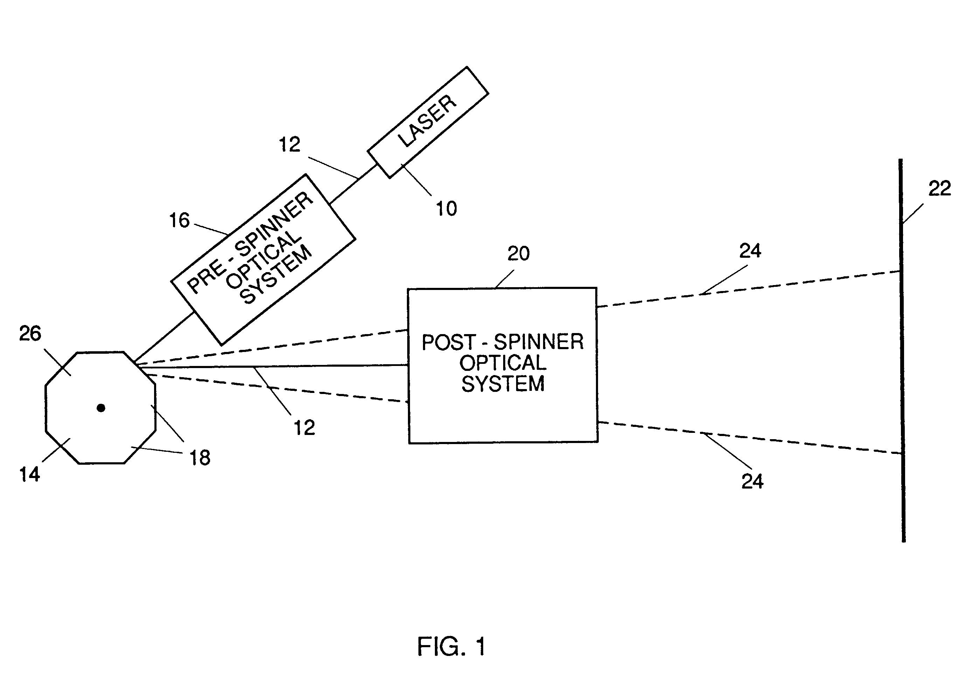

Scanning devices, such as laser plotters and laser scanners, are known in the art. As shown in Fig. 1, to which reference is now made, laser scanning devices typically comprise a laser source 10 which produces a laser beam 12 and a spinner 14 which receives the laser beam 12 after it has passed through a pre-spinner optical system 16 operative to shape and/or modify the laser beam 12.

The spinner 14 comprises a motor (not shown) and a polygon typically having a plurality of facets 18, only one of which generally is operative at a given time, to reflect the laser beam 12 towards a medium 22 to be scanned. Each facet 18 is operative to scan at least one line of the medium 22 and the angle through which each facet 18 scans is indicated in Fig. 1 by the dotted lines, marked 24.

In some devices, a post-spinner optical system 20 is also included which typically comprises a flat-field lens operative to provide a planar image on the medium 22 (the focal point of the lens) and to direct the laser beam 12 towards the medium 22, typically via a mirror if the medium 22 is not, as shown in Fig. 1, parallel with a rotation axis 26 of the spinner 14 (perpendicular to the page of Fig. 1).

In order for a laser scanning device to operate at high accuracy and resolution it must accurately control the location of the laser beam, along the scan direction and along the direction perpendicular to the scan direction, the direction known as the "cross-scan" direction.

As described in Chapter 6 of the book Optical Scanning by Gerald F. Marshall, Marcel Dekker, Inc. NY, 1991 which is incorporated herein by reference, beam location errors are known to be caused by errors in the angle of one or more of the facets 18, known as "pyramidal error", by wobble of the rotation axis 26 or by a combination of both sources of error.

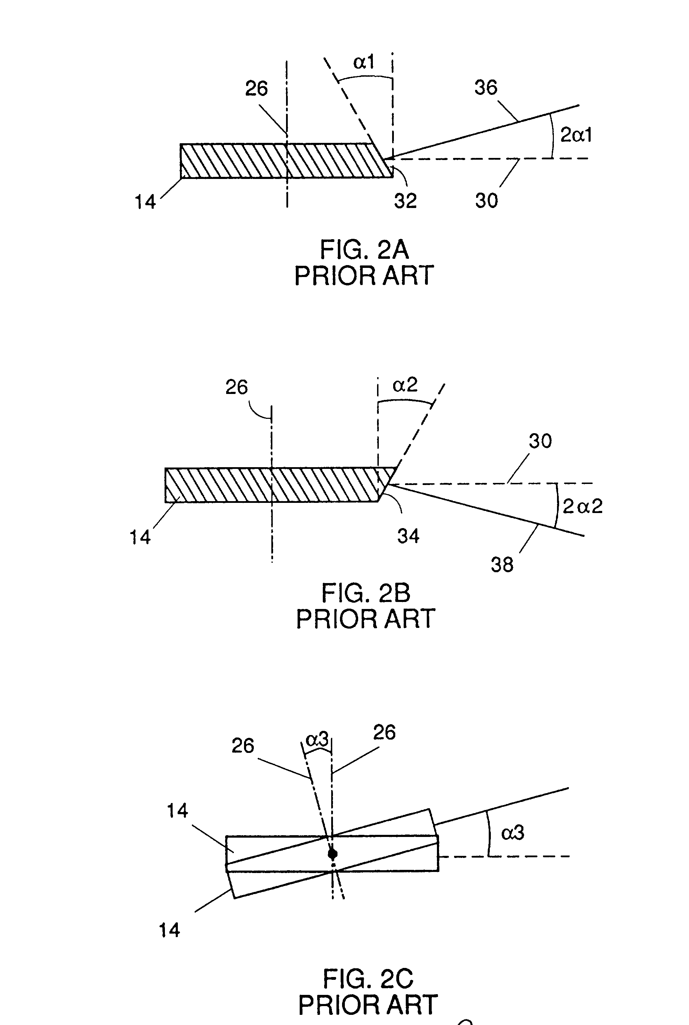

Pyramidal errors are illustrated in Figs. 2A and 2B, to which reference is now briefly made. Figs. 2A and 2B are side views of the polygon 14.

Ideally, the reflecting surface of each facet 18 should be parallel to the rotation axis 26 such that the incoming beam 12 is reflected along a plane 30 perpendicular to the rotation axis 26.

However, typically, polygons 14 are manufactured with facets, labeled 32 and 34 in Figs. 2A and 2B, respectively, at angles $\alpha_1$ and $\alpha_2$, respectively, to the ideal direction. An incoming beam which impinges an angled facet 32 or 34 is reflected along a reflection plane which is at an angle to plane 30 twice as large as the error in the facet direction. Thus, in Fig. 2A, the reflection plane 36 is at an angle $2\alpha_1$ to the plane 30 and in Fig. 2A, the reflection plane 38 is at an angle $2\alpha_2$ to the plane 30.

As shown in Fig. 2C to which reference is now briefly made, the wobble is a rotation of the rotation axis 26 of the spinner 14 and is caused by inaccurate balancing of the polygon. The wobble causes a changing angular error $\alpha_3$, which, in turn, causes a changing error in the reflection plane in a manner similar to that described hereinabove for Figs. 2A and 2B.

The scanning error is typically a combination of the two types of error and there are a plurality of methods by which prior art scanning devices reduce the scanning error.

Some prior art scanning devices include a cylindrical lens in the pre-spinner optical system 16. The cylindrical lens concentrates the laser beam into a line parallel to the scanning direction and focuses the concentrated beam onto the currently active facet 18.

However, in order to focus the reflected beam onto the medium 22, the cylindrical lens requires that the post-spinner optical system 20 be comprised of complicated optical elements, producing an expensive scanning device.

In other prior art devices, the spinner 14 is comprised of an element having two flat, opposing reflective surfaces, such as a penta-prism, from which the beam reflects. Due to the opposition of the surfaces, any errors in the laser beam caused by one surface are canceled by the reflection off the second surface.

This solution is typically utilized to reduce wobble in single faceted devices and is not easily extendible to a multi-faceted polygonal spinner.

Alternatively, in order to reduce the wobble, it is known to utilize expensive oil or air bearings for the spinner 14. If there is any pyramidal error, it is measured and a LookUp Table (LUT) is utilized to cancel it out.

Even if the pyramidal and wobble errors are corrected, if one or all of the facets is not perfectly flat, the scanned line will not be perfectly straight.

One solution for all three sources of error is the addition of a beam position detector in the post-spinner optical system 20. The beam position detector requires that the system include a reference beam, in addition to the scanning beam or beams, which follows a large percentage of the optical path of the scanning beams. The beam position detector detects the location of the reference beam, in order to continually measure the error in the location of the scanning beams. The measured data is provided either to acousto-optic deflectors for deflecting the reference and scanning beams to the correct location, or, as described in U.S. Patent No. 5,247,174 to the common owners of the present application, to piezo-electric crystals for shifting the location of fiber optic bundles which carry the scanning and reference beams to the correct location. The closed-loop control system thus produced maintains the scanning and reference beams in the desired locations.

However, the beam position detector is expensive, it requires that an additional beam, the reference beam, be produced and it includes complicated optics to ensure that the two beams follow almost identical optical paths.

## SUMMARY OF THE INVENTION

It is, therefore, an object of the present invention to provide a relatively inexpensive unit and method for compensating for inaccuracies in the planes of the facets.

There is therefore provided, in accordance with a preferred embodiment of the present invention, a facet inaccuracy compensation unit operative in conjunction with a spinner having a plurality of facets, the current one of which scans a light beam along a scan line. The compensation unit includes first and second light spot misalignment detectors, a beam location corrector and a beam shifter. The first and second light spot misalignment detectors are respectively located close to a beginning and an end of the scan line, and respectively measure initial and final misalignments of a light spot scanned in a cross-scanning direction. The beam location corrector determines first and second corrections for the initial and final misalignments and determines a curve through previous values of the first and second corrections for the current facet. The beam shifter receives the curve and, in response thereto, shifts the location of the light beam thereby to correct for inaccuracies of the current facet.

Additionally, in accordance with preferred embodiments of the present invention, the spinner forms part of either a laser reading or a laser writing device.

Moreover, in accordance with a preferred embodiment of the present invention, the beam location corrector includes a storing digitizer, a per facet controller, a curve determiner and an interpolator. The storing digitizer stores the output of the light spot misalignment detectors and provides the previous values of the light spot misalignment detectors for the current facet. The per facet controller generates the first and second corrections from the previous values. The curve determiner determines the parameters of a curve through the first and second corrections. The interpolator generates the curve from the curve parameters.

Further, in accordance with a preferred embodiment of the present invention, the interpolator generates the curve for points on the scan line located at least before the location of the first light spot misalignment detector.

There is also provided, in accordance with an alternative, also preferred embodiment of the present invention, a laser writing device including a laser source providing a light beam, a spinner having a plurality of facets for scanning the light beam along a scan line and a facet inaccuracy compensation unit such as that described hereinabove.

There is still further provided, in accordance with a further preferred embodiment of the present invention, a laser reading device including a detector, a shiftable pre-detector optical system, a spinner and a facet inaccuracy compensation unit such as is described hereinabove. The spinner has a plurality of facets, receives incoming light beams from a scan line and provides the light beams to the detector.

The present invention can also be utilized for controlling devices other than light beams. Accordingly, in accordance with another preferred embodiment of the present invention, the control system includes first and second misalignment detectors, a device location corrector and a device shifter. The first and second misalignment detectors are respectively located within a desired trajectory, and respectively measure first and second misalignments of the device along the trajectory. The device location corrector determines first and second corrections for the first and second misalignments and determines a curve through previous values of the first and second corrections for the trajectory. The device shifter receives the curve and, in response thereto, shifts the location of the device.

## BRIEF DESCRIPTION OF THE DRAWINGS

The present invention will be understood and appreciated more fully from the following detailed description taken in conjunction with the drawings in which:

Fig. 1 is a part schematic, part block diagram illustration of prior art laser scanning devices:

Figs. 2A, 2B and 2C are schematic illustrations of sources of errors in scan lines in prior art laser scanning devices, where Figs. 2A and 2B illustrates errors in facet angle and Fig. 2C illustrates wobble;

Fig. 3A is a part schematic, part block diagram top view illustration of a laser writing device having a facet inaccuracy compensation unit constructed and operative in accordance with a preferred embodiment of the present invention;

Fig. 3B is a schematic view, in the direction of arrow B of Fig. 3A, of the scanning surface of the laser scanning device of Fig. 3A;

Fig. 4 is a block diagram illustration of elements of a beam location corrector, constructed and operative in accordance with a preferred embodiment of the present invention and useful in the system of Fig. 3A;

Fig. 5 is a timing diagram illustration useful in understanding the operation of the beam location corrector of Fig. 4; and

Fig. 6 is a part schematic, part block diagram illustration of a laser reading device having a facet inaccuracy compensation unit constructed and operative in accordance with a second preferred embodiment of the present invention.

## DETAILED DESCRIPTION OF THE PREFERRED EMBODIMENTS

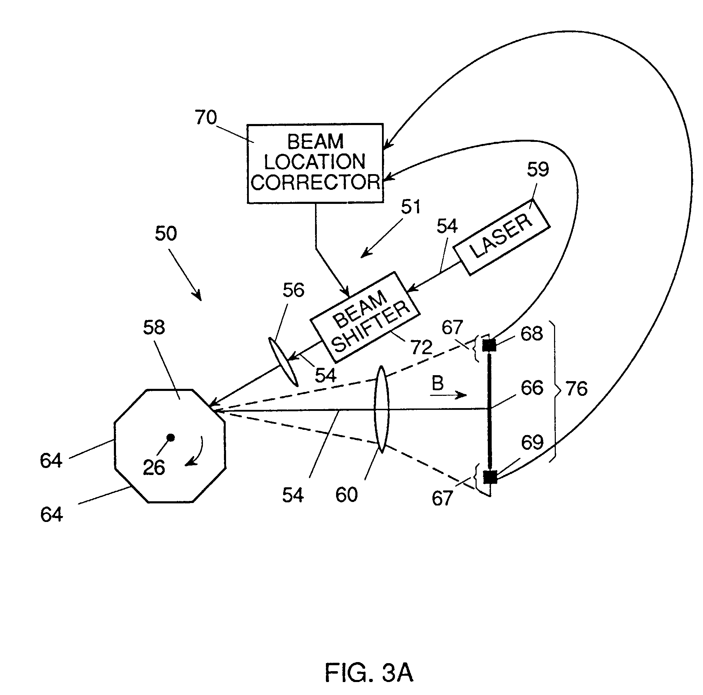

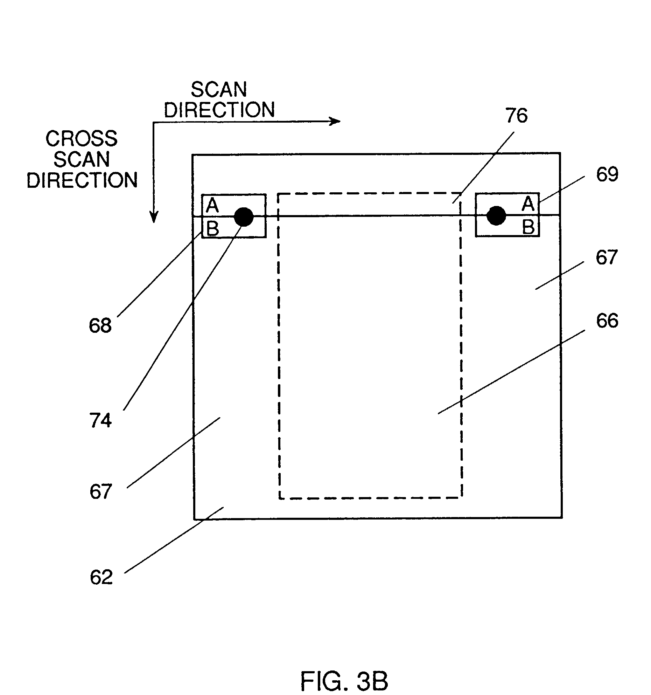

Reference is now made to Figs. 3A and 3B which illustrate one embodiment of the present invention. Fig. 3A illustrates an exemplary laser writing unit 50 having a facet inaccuracy compensation unit 51 constructed and operative in accordance with a preferred embodiment of the present invention and Fig. 3B illustrates the scanning surface of the system of Fig. 3A.

The compensation unit 51 typically can be applied to any suitable laser scanning device, such as one for reading or for writing. It will described in the context of the writing device shown in Fig. 3A.

The scanning device may comprise a laser source 52 which produces a laser beam 54, a pre-spinner optical system 56 represented by a lens and operative to shape and modify the beam 54 as necessary, a spinner 58, a flat-field lens 60 and a scanning surface 62 onto which the beam 54 is scanned by each facet 64 of the spinner 58.

The facet inaccuracy compensation unit 51 comprises two light spot location detectors 68 and 69, a beam location corrector 70 and a beam shifter 72.

The spinner 58 scans the beam 54 along a scan line 76 which includes an active portion 66 sandwiched between two passive portions 67. The two spot detectors 68 and 69 are located along the scan line 76 but within the passive portions 67, one per portion 67. The light spot detectors 68 and 69 respectively detect the initial and final misalignment of the spot of beam 54 per scan line 76.

The beam location corrector 70 determines, from the output of detectors 68 and 69, misalignment correction signals for the scan line within the scanning area 66 and to provide the misalignment correction signals to the beam shifter 72, located between the laser 52 and the scanning surface 62. Fig. 3A illustrates the beam shifter 72 before the spinner 14; the beam shifter 72 can also be present after the spinner 14.

The beam shifter 72 can be any suitable beam shifter, such as an acousto-optic deflector or a mirror operating on a laser beam or a piezoelectric actuator operating on a fiber optic waveguide. As is known in the art, the acousto-optic deflector has a much faster response time than that of the piezoelectric actuator.

Spot detectors 68 and 69 are attached to a chassis (not shown) upon which the beam shifter 72, optical system 56, spinner 58 and flat field lens 60 are located. As is known in the art, the chassis can move along surface 62 in the cross-scan direction or the chassis can remain fixed and the surface 62 can move.

In accordance with the present invention, the spot detectors 68 and 69 can be standard bi-cell detectors. An exemplary bi-cell detector is the SPOT-2D detector from UDT Sensors, Inc. of Hawthorne, California, USA. The spot detectors 68 and 69 measure the extent to which a spot 74 of beam 54, when it passes the detectors 68 and 69, is not centered with respect to a line 76 to be written.

To do so, the spot detectors 68 and 69 measure the intensity of the light shining on each half, labeled A and B. If both halves have the same intensity, the beam is centered. Otherwise, the beam is off-centered in either the A direction (i.e. A has a greater intensity) or the B direction.

In accordance with the present invention and as described in detail hereinbelow, from the misalignment measured by the spot detectors 68 and 69, which are the misalignments at the beginning and end of the scan line 76, the beam location corrector 70 determines and implements the necessary corrections of the beam 54 over the line 76 to be scanned. It is noted that the scan line 76 extends outside of scanning area 66. The process is repeated for each line to be scanned, each of which corresponds to a different facet 64.

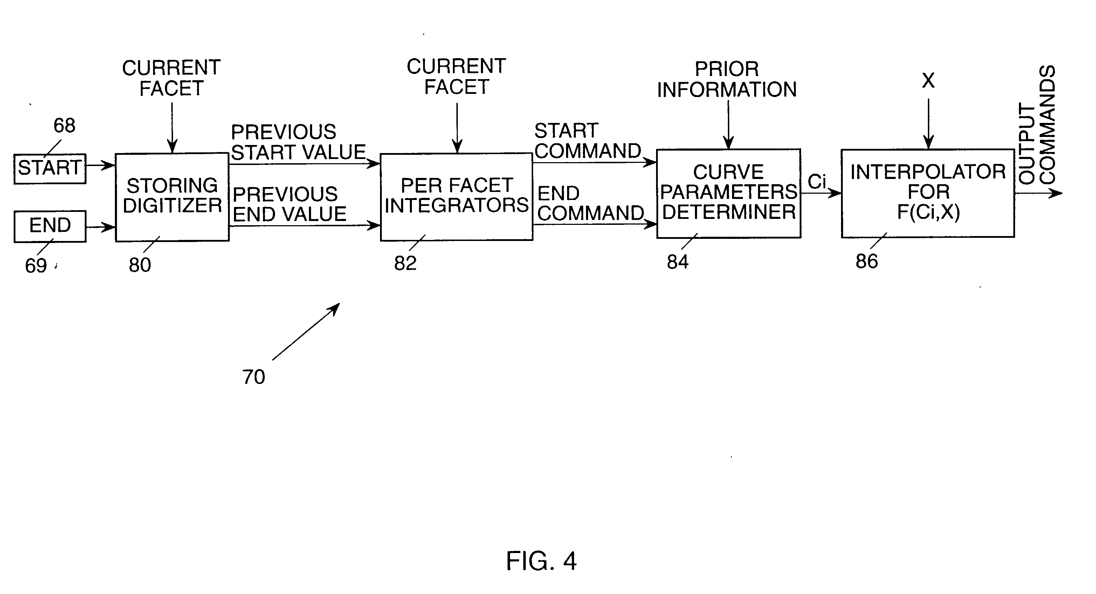

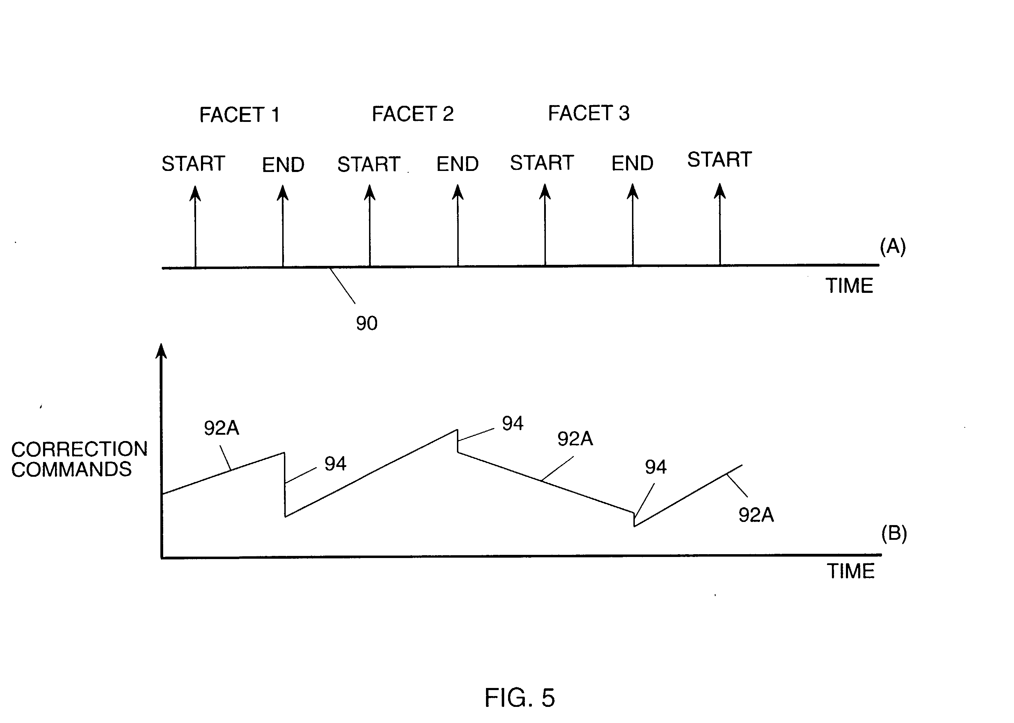

Reference is now made to Fig. 4 which illustrates the elements of the beam location corrector 70 and to Fig. 5 which is a timing diagram of the operation of beam location corrector 70.

The beam location corrector 70 comprises a storing digitizer 80, per facet control elements 82, a control curve parameter determiner 84 and an interpolator 86. Storing digitizer 80 digitizes the output of each spot detector 68 and 69, typically with an analog-to-digital converter, and stores the digitized output along with the number of the facet which was scanned at the time. Since the output of spot detector 69, being the error at the end of the scan line 76, is only received after the line 76 has been scanned, prior to each scan line, storing digitizer 80 releases the outputs of detectors 68 and 69 from the previous time the current facet was utilized.

The per facet control elements 82 can be any stabilizing control elements, such as integrators. There are two control elements 82 per facet, each processing the output of one of spot detectors 68 or 69. The control elements 82 determine correction signals for the errors detected by spot detectors 68 and 69. As these corrections are only for two points along the scan line, the correction for the whole line must be determined. The whole line correction determination is performed in two parts, by determiner 84 and by interpolator 86. Determiner 84 determines the parameters of a curve which goes through the two datapoints represented by the output of the integrators 82 and interpolator 86 determines the actual correction signal for each point X of the scan line.

Determiner 84 matches the two points to any desired function, such as a straight line, a polynomial curve, or any other function. If the function is a high order polynomial, external information about the optical system of the device is also required. The function can also be a description of the expected pyramidal and wobble errors.

For example, for a straight line function, determiner 84 determines the slope $C_1$ and the y-intercept $C_2$ of the line, as follows:

a) Let A be the error correction at time t1 for the output of spot detector 68, let B be the error correction at time t2 for the output of spot detector 69 and let the output of spot detector 69 from the previous facet occur at time t0;

b) The slope $C_1$ of the line between A and B is:

$$C_1 = (B - A) / (t2 - t1) \qquad (1)$$

c) The y-intercept $C_2$ of the line is:

$$C_2 = A - C_1 (t1 - t0) \qquad (2)$$

Determiner 84 determines the parameters $C_i$ of the curve which matches the two points. These parameters $C_i$ are provided to the interpolator 86 which receives each cross-scanning position X (for the entire scan line 76) and generates for it, in real-time, the correction value via the selected function $F(C_i,X)$. The correction value is provided to the beam shifter 72 which shifts the beam accordingly. It is noted that the cross-scanning positions X include positions within the passive portions 67.

Fig. 5 illustrates the timing for the beam location corrector 70 and the output of the interpolator 86 for a few facets. Curve (a) indicates the times at which the output of spot detectors 68 and 69, indicated by START and END, respectively, are received. It is noted that there is a dead period of time 90 between the END measurement of one facet and the START measurement of the next facet.

Curve (b) illustrates the output of the interpolator 86 for a straight line correction function $F(C_i,X)$ such as described hereinabove. As can be seen, each facet has its own correction line, marked 92a, 92b, 92c and 92d, where each line has its own slope and y-intercept. When a facet has finished scanning, typically shortly after scanning over the end spot detector 69, the determiner 84 provides the interpolator 86 with the parameters $C_i$ for the next facet. (It is noted that, since determiner 84 works on prior output of the spot detectors 68 and 69, it can generate the parameters for the next facet at any desired time).

Since the correction signal for the end of one facet is rarely the correction signal for the beginning of the next facet, the curve (b) has jumps 94 from one facet to the next. In order to ensure that, by the time of scanning the active scanning area 66, the beam shifter 72 is moving smoothly, the jumps 94 typically occur at a scanning location before the location of initial spot detector 68. The correction function $F(C_i,X)$ is determined, not from the START location, but from the location of the jumps 94.

It is noted that, if the scanning device utilizes more than one scanning beam, the spot detectors 68 and 69 can measure the error for each beam as the beam passes over the detector. The error correction values are produced, per beam and the above calculations are then performed on the average of the error correction values.

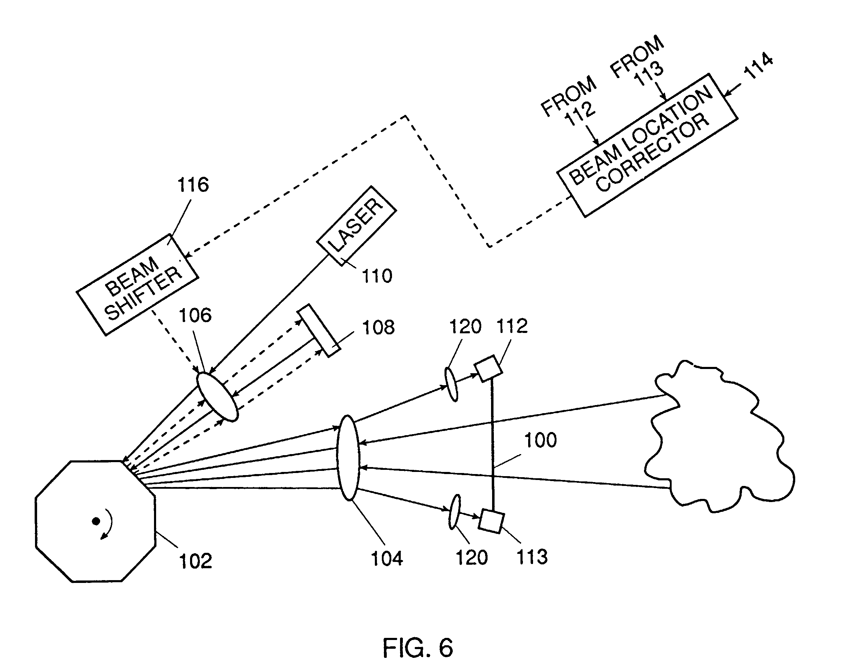

Reference is now made to Fig. 6 which illustrates a facet inaccuracy compensation unit suitable for reading scanning devices. The reading device can either be one which scans a medium, such as a transparency, or one which scans a view, such as that of the heavens. In either case, an image is produced. The reading device typically comprises a window 100 on which (or through which) the image is to be gathered, a spinner 102, pre-spinner optics 104, post-spinner optics 106 and a detector 108. The light from the window 100 is passed through optics 104 and onto spinner 102 which scans it across detector 108, via optics 106.

The facet inaccuracy compensation unit comprises a laser 110, two spot detectors 112 and 113 and their associated focusing optics 120, a beam location corrector 114, and a beam shifter 116. When no light is being gathered through window 100, the laser 110 shines onto the spinner 102, via the optics 106. The spinner 102 scans the light onto the spot detectors 112 and 113 which, in turn, determine the extent of the error at each end of the current facet. The output of the spot detectors 112 and 113 are provided to the beam location corrector 114 which operates similar to the beam location corrector 70 of Fig. 3A. Beam location corrector 114 activates the beam shifter 116, which, in turn affects one of the pre- and post-spinner optics 104 and 106, in order to change the location of the beam received from the spinner 102. In this manner, the inaccuracies of the facets, due to wobble, pyramidal error or lack of flatness, are compensated before the beam arrives at the detector 108.

It will be appreciated that the compensation unit of the present invention can be utilized for controlling other periodic positioning systems which attempt to position a device (arm, etc) repeatedly along a desired trajectory. For these applications, the sensors are not light detectors but appropriate sensors for sensing the location of the device with respect to the ideal position along the trajectory. The sensors can be located anywhere along the desired trajectory.

It will be appreciated by persons skilled in the art that the present invention is not limited to what has been particularly shown and described hereinabove. Rather the scope of the present invention is defined only by the claims which follow:

**Claims**

1. A facet inaccuracy compensation unit operative in conjunction with a spinner having a plurality of facets, the current one of which scans a light beam along a scan line, the unit comprising:

a. first and second light spot misalignment detectors, respectively located close to a beginning and an end of said scan line, for respectively measuring initial and final misalignments of a light spot scanned in a cross-scanning direction;

b. a beam location corrector which determines first and second corrections for said initial and final misalignments and which determines a curve through previous values of said first and second corrections for said current facet; and

c. a beam shifter which receives said curve and which, in response thereto, shifts the location of said light beam thereby to correct for inaccuracies of said current facet.

2. A unit according to claim 1 and wherein said spinner forms part of a laser reading device.

3. A unit according to claim 1 and wherein said spinner forms part of a laser writing device.

4. A unit according to claim 1 and wherein said beam location corrector comprises:

   a. A storing digitizer for storing the output of said light spot misalignment detectors and for providing the previous values of said light spot misalignment detectors for said current facet;

   b. a per facet controller for generating said first and second corrections from said previous values;

   c. a curve determiner for determining the parameters of a curve through said first and second corrections; and

   d. an interpolator for generating said curve from said curve parameters.

5. A unit according to claim 4 and wherein said interpolator generates said curve for points on said scan line located at least before the location of said first light spot misalignment detector.

6. A laser writing device comprising:

   a. A laser source providing a light beam;

   b. A spinner having a plurality of facets for scanning said light beam along a scan line; and

   c. a facet inaccuracy compensation unit for compensating for errors in said facets, said unit comprising:

      i. first and second light spot misalignment detectors, respectively located close to a beginning and an end of said scan line, for respectively measuring initial and final misalignments of a light spot scanned in a cross-scanning direction;

      ii. a beam location corrector which determines first and second corrections for said initial and final misalignments and which determines a curve through previous values of said first and second corrections for said current facet; and

      iii. a beam shifter which receives said curve and which, in response thereto, shifts the location of said light beam thereby to correct for inaccuracies of said current facet.

7. A laser reading device comprising:

   a. A detector;

   b. A shiftable pre-detector optical system;

   c. a spinner having a plurality of facets for receiving incoming light beams from a scan line and for providing said light beams to said detector; and

   d. a facet inaccuracy compensation unit for compensating for errors in said facets, said unit comprising:

      i. first and second light spot misalignment detectors, respectively located close to a beginning and an end of said scan line, for respectively measuring initial and final misalignments of a light spot scanned in a cross-scanning direction;

      ii. a beam location corrector which determines first and second corrections for said initial and final misalignments and which determines a curve through previous values of said first and second corrections for said current facet; and

      iii. a beam shifter which receives said curve and which, in response thereto, affects said pre-detector optical system thereby to correct for inaccuracies of said current facet.

8. A control system for controlling the positioning of a device, the control system comprising:

   a. first and second misalignment detectors, respectively located within a desired trajectory, for respectively measuring first and second misalignments of said device along said trajectory;

   b. a device location corrector which determines first and second corrections for said first and second misalignments and which determines a curve through previous values of said first and second corrections for said trajectory; and

   c. a device shifter which receives said curve and which, in response thereto, shifts the location of said device.

FIG. 1

FIG. 2A
PRIOR ART

FIG. 2B
PRIOR ART

FIG. 2C
PRIOR ART

FIG. 3A

EP 0 704 738 A1

FIG. 3B

CURRENT
FACET

CURRENT
FACET

PRIOR
INFORMATION

X

68

START

END

69

STORING
DIGITIZER

80

PREVIOUS
START VALUE

PREVIOUS
END VALUE

PER FACET
INTEGRATORS

82

START
COMMAND

END
COMMAND

CURVE
PARAMETERS
DETERMINER

84

$C_i$

INTERPOLATOR
FOR
$F(C_i, X)$

86

OUTPUT
COMMANDS

70

FIG. 4

FACET 1          FACET 2          FACET 3

START    END    START    END    START    END    START

(A)

TIME

90

CORRECTION
COMMANDS

92A          94
         94       92A          94
                                      92A

(B)

TIME

FIG. 5

EP 0 704 738 A1

FIG. 6

**European Patent Office**

## EUROPEAN SEARCH REPORT

Application Number

EP 95 30 6716

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-5 235 438 (SASADA SHIGERU) 10 August 1993<br>* column 11, line 21-47; figures 2,7 *<br>--- | 1,4,6-8 | G02B27/00 |
| Y | US-A-4 829 175 (GOTO CHIAKI ET AL) 9 May 1989<br>* column 10, line 15 - column 11, line 54; claims 1-3; figures 1-5 * | 1,4,6-8 | |
| A | * column 12, line 5-10 *<br>--- | 8 | |
| A | US-A-5 138 479 (ANDO TOSHINORI) 11 August 1992<br>* column 7, line 6-35; figures 2,8,10 *<br>--- | 1,4,6-8 | |
| A | PATENT ABSTRACTS OF JAPAN<br>vol. 009 no. 127 (P-360) ,31 May 1985<br>& JP-A-60 010221 (FUJITSU KK) 19 January 1985,<br>* abstract *<br>--- | 1,4,6-8 | |
| A | EP-A-0 054 170 (HELL RUDOLF DR ING GMBH) 23 June 1982<br>* claims 1,8,10,13 *<br>--- | 1,4,6-8 | TECHNICAL FIELDS SEARCHED (Int.Cl.6)<br><br>G02B |
| A | PATENT ABSTRACTS OF JAPAN<br>vol. 007 no. 202 (P-221) ,7 September 1983<br>& JP-A-58 100117 (KONISHIROKU SHASHIN KOGYO KK) 14 June 1983,<br>* abstract *<br>----- | 4 | |

The present search report has been drawn up for all claims

| Place of search | Date of completion of the search | Examiner |
|---|---|---|
| BERLIN | 10 January 1996 | Fuchs, R |

EPO FORM 1503 03.82 (P04C01)